# EUROPEAN PATENT APPLICATION

(11) **EP 4 723 651 A1**
(43) Date of publication of application: **08.04.2026**
(21) Application number: 24205079.7
(22) Date of filing: 07.10.2024
(51) Int. Cl.: H04N 21/239, H04N 21/258, H04N 21/45, H04N 21/658

(54) **METHOD AND SYSTEM FOR ENFORCING ACCESS CONTROLS FOR MEDIA STREAMS**

(71) Applicant: Nagravision Sàrl, 1033 Cheseaux-sur-Lausanne (CH)
(72) Inventor: GIDLEY, Benjamin, Cheseaux-sur-Lausanne (CH); POWELL, Matthew, Cheseaux-sur-Lausanne (CH)
(74) Representative: Parker, Andrew James

(57) **Abstract**

A method, system, processing circuitry, and computer program product for determining whether at least one version of a video stream is permitted to be streamed to a device by comparing (a) a received set of device characteristics corresponding to the device and (b) a set of permitted device characteristics for the video stream to be streamed. The received set of device characteristics can be used to assign a device to one of plural device classes, and the at least one version of the video stream to be streamed may be determined based on the assigned device class.

## Description

### BACKGROUND OF THE INVENTION

A method, system, processing circuitry, and computer program product for enforcing access controls for media streams, and, in one embodiment, a method, system, processing circuitry, and computer program product for determining whether at least one version of a video stream is permitted to be streamed to a device by comparing (a) a received set of device characteristics and (b) a set of permitted device characteristics for the video stream to be streamed.

Content providers are increasingly providing subscription-based, stream-based content delivery as opposed to broadcast or set-top box delivery. The devices that receive the content, however, are not standardized as to their playback formats and hardware configurations, and, indeed, hardware configurations continue to evolve on an almost daily basis. Thus, the format of a stream that is to be sent to a device can vary greatly between devices, and content providers increasingly need to be able to manage which devices receive which streams in a less burdensome manner.

Furthermore, which streams should be sent to which hardware is only one aspect of a more universal content enforcement problem. Other problems, such as device location and the existence of multiple devices of an account being used simultaneously, can further complicate the stream enforcement issues of a content management system.

### SUMMARY OF THE INVENTION

Broadly, the present invention aims to address the issues identified with the prior art by providing a computer-implemented method of controlling access to video streams in which device characteristics such as hardware-specific characteristics are received, and permission to stream a requested video stream is based on those received device characteristics.

More specifically, a first aspect of the invention provides a computer-implemented method of controlling access to video streams, the method including, but not limited to: receiving a set of device characteristics indicating hardware-specific characteristics of a device; receiving from the device a request for a video stream to be streamed to the device; confirming the received set of device characteristics is one of a set of permitted device characteristics for the requested video stream; and streaming the requested video stream to the device after confirming that the received set of device characteristics is one of the set of permitted device characteristics for the requested video stream.

The set of device characteristics indicating hardware-specific characteristics of the device may comprise a screen size of the device; and confirming the received set of device characteristics is one of a set of permitted device characteristics for the requested video stream may comprise confirming that the screen size of the device is included in the one of the set of permitted device characteristics for the requested video stream.

Receiving the set of device characteristics indicating hardware-specific characteristics of the device may include, but is not limited to, receiving a device type of the device. Accordingly, confirming the received set of device characteristics is one of the set of permitted device characteristics for the requested video stream may include, but is not limited to, confirming that the device type of the device is included in one of plural device classes that are authorized to receive the requested video stream. Accordingly, streaming the requested video stream to the device may include, but is not limited to, streaming the requested video stream according to the one of the plural device classes in which the device type of the device is included.

The device type may be a device type selected from the group consisting of: a mobile device, a tablet, an IoT device, a television, and a computer, either collectively or in any subcombination. The device type may be information indicating a brand of the device.

Receiving the set of device characteristics indicating hardware-specific characteristics of the device may include, but is not limited to, receiving an indication of whether the device is an AC-powered device. Confirming the received set of device characteristics is one of the set of permitted device characteristics for the requested video stream may include, but is not limited to, confirming that the device is an AC-powered device. Streaming the requested video stream to the device may include, but is not limited to, streaming the requested video stream based on having confirmed that the device is an AC-powered device.

The computer-implemented method according to the first aspect of the invention may further comprise receiving a set of account-specific information associated with an account associated with the device. Streaming the requested video stream to the device may comprise streaming the requested video stream based on a set of permitted ranges of the account-specific information.

The received set of account-specific information associated with the account associated with the device may include, but is not limited to, account-specific information indicating a number of concurrent streams currently being streamed to devices of the account.

The computer-implemented method according to the first aspect of the invention may further include receiving geographic location information associated with a geographic location of the device. Streaming the requested video stream to the device may include, but is not limited to, streaming the requested video stream based on the geographic location information associated with the geographic location of the device.

The computer-implemented method according to the first aspect of the invention may further include receiving geographic location information associated with a geographic location of the device. Streaming the requested video stream to the device may comprise streaming the requested video stream in a geographically restricted region based on determining that the received set of device characteristics indicates that the device is permitted access to the requested video stream regardless of whether the geographic location information indicates that the device is located in the geographically restricted region.

Receiving the set of device characteristics indicating hardware-specific characteristics of the device may include, but is not limited to, receiving an aspect ratio of a screen of the device. Confirming the received set of device characteristics is one of the set of permitted device characteristics for the requested video stream may include, but is not limited to, confirming that the aspect ratio of the screen of the device is included in the one of the set of permitted device characteristics for the requested video stream; and streaming the requested video stream to the device after confirming that the aspect ratio of the screen of the device is included in the one of the set of permitted device characteristics for the requested video stream.

The computer-implemented method according to the first aspect of the invention may further include receiving bandwidth information associated with the device; wherein confirming the received set of device characteristics is one of a set of permitted device characteristics for the requested video stream includes, but is not limited to, confirming that the bandwidth information associated with the device indicates that the device has a required bandwidth for the requested video stream; and wherein streaming the requested video stream to the device includes, but is not limited to, streaming the requested video stream to the device at a transmission bandwidth based on the received bandwidth information.

The computer-implemented method according to the first aspect of the invention may further include specifying the set of permitted device characteristics for the video stream to be streamed using a graphical user interface.

The computer-implemented method according to the first aspect of the invention may further include specifying the set of permitted device characteristics for the video stream to be streamed by duplicating another set of permitted device characteristics for another video stream having a same content type as the video stream to be streamed.

Receiving the set of device characteristics indicating hardware-specific characteristics of the device may include, but is not limited to, receiving an amount of memory of the device. Confirming the received set of device characteristics is one of the set of permitted device characteristics for the requested video stream may include, but is not limited to, confirming that the amount of memory of the device is sufficient to playback the requested video stream. Streaming the requested video stream to the device may include, but is not limited to, streaming the requested video stream based on having confirmed that the amount of memory of the device is sufficient to playback the requested video stream.

The computer-implemented method according to the first aspect of the invention may further include receiving a set of platform-specific information associated with a platform on which the device plays backs video streams. Streaming the requested video stream to the device may comprise streaming the requested video stream based on having confirmed that the platform on which the device plays backs video streams supports playback the requested video stream.

The set of platform-specific information may include, but is not limited to, at least one of a browser platform or an operating system platform.

The computer-implemented method according to the first aspect of the invention may further include receiving from the device an indication of a video resolution at which to stream the video stream.

Receiving from the device the request for the video stream may include, but is not limited to, receiving from the device a Uniform Resource Locator (URL) indicating the video stream to be streamed to the device.

Receiving the set of device characteristics may comprise receiving at least one of (1) a JSON request indicating the hardware-specific characteristics of the device or (2) a set of key:: value pairs indicating the hardware-specific characteristics of the device.

The computer-implemented method according to the first aspect of the invention may further include receiving an indication that the device is at a home location; wherein confirming the received set of device characteristics is one of a set of permitted device characteristics for the requested video stream may include, but is not limited to, confirming that the device is at the home location. Streaming the requested video stream to the device may include, but is not limited to, streaming the requested video stream to the device when the device is at the home location.

Receiving the indication that the device is at the home location may include, but is not limited to, one or any subset of: (a) receiving an indication that the device responded to a services discovery protocol message of a set top box, (b) receiving an indication that the device scanned a dynamic or static QR code of the set top box, (c) receiving an indication that the device received an audio signal from the set top box, (d) receiving an indication that a ping latency between the set top box and the device is below a threshold, (e) receiving an indication that the device request is from a user's home location, (f) receiving an indication that the set top box and the device are behind a same network address translation device, and (g) receiving an indication that an ultrawideband signal indicates that the device is near the set top box.

A second aspect of the present invention provides a computer system including at least one processor and at least one memory, wherein the at least one memory includes computer instructions when executed by the at least one processor cause the at least one processor to perform the computer-implemented method of the first aspect of the invention. The optional features set out in respect of the first aspect of the invention apply equally well to the second aspect of the invention.

A third aspect of the invention provides a computer readable medium encoded with computer instructions which, when executed by at least one processor, cause the at least one processor to perform the computer-implemented method of the first aspect of the invention. The optional features set out in respect of the first aspect of the invention apply equally well to the third aspect of the invention.

A fourth aspect of the present invention provides a computer-implemented method implemented on a device for requesting access to a video stream from a content provider, including, but not limited to: (a) providing a set of device characteristics indicating hardware-specific characteristics of the device to the content provider; (b) sending a request for a video stream to be streamed to the device; and (c) receiving the requested video stream at the device after the content provider has confirmed that the received set of device characteristics is one of the set of permitted device characteristics for the requested video stream.

The computer implemented method may further comprise communicating with the content provider according to the computer-implemented method of the first aspect of the invention. The optional features set out in respect of the first aspect of the invention apply equally well to the fourth aspect of the invention.

A fifth aspect of the invention provides a computer system including at least one processor and at least one memory, wherein the at least one memory includes computer instructions when executed by the at least one processor cause the at least one processor to perform the method of the fourth aspect of the invention. The optional features set out in respect of the first aspect of the invention and the fourth aspect of the invention apply equally well to the fifth aspect of the invention.

A sixth aspect of the invention provides a computer readable medium encoded with computer instructions which, when executed by at least one processor, cause the at least one processor to perform the method of the fourth aspect of the invention. The optional features set out in respect of the first aspect of the invention and the fourth aspect of the invention apply equally well to the sixth aspect of the invention.

In addition to the features described individually above, all combinations of optional features from all aspects of the invention are also envisaged.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is an illustration of a content management system interacting with plural media devices to enforce content control policies on the streams received by and played back on the plural media devices;
FIG. 2 is a flowchart showing a generalized processing method for determining whether at least one version of a video stream is permitted to be streamed to a device;
FIG. 3 is a block diagram showing exemplary device classes for characterizing devices such that access control to streams may be provided on a device class-basis; and
FIG. 4 is a schematic illustration of a series of rows in a database that map a Stream_ID and a Device_Class to a stream to be provided to the device of the Device_Class.

### DETAILED DESCRIPTION

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). Reference throughout this document to "one embodiment", "certain embodiments", "an embodiment", "an implementation", "an example" or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

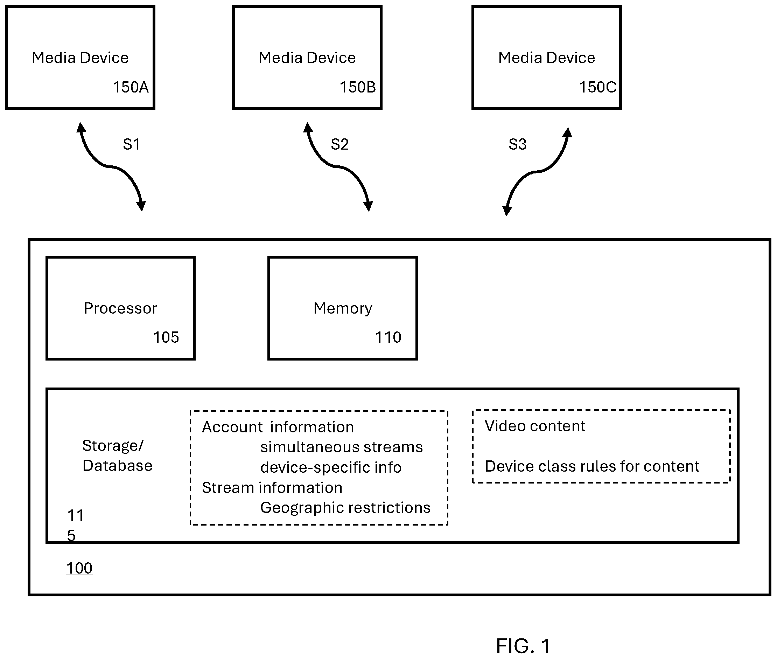

FIG. 1 is an illustration of a content management system 100 interacting with plural media devices (150A, 150B, and 150C) to enforce content control policies on the streams received by and played back on the plural media devices. Because streams can utilize differing amounts of bandwidth, and because bandwidth and stream encoding affect quality for the viewers, the content management system is configured to address configuring and enforcing access to different versions of the same stream by different devices and users under varying conditions.

As shown in FIG. 1, media devices 150A, 150B, and 150C communicate with a content management system 100 using streams S1, S2, and S3. Content management system 100 includes at least one processor 105 that is controlled by instructions contained in at least one memory 110. Content (e.g., video streams) is stored in non-volatile storage 115 such as may be configured to store a database for query by the processor 105. Content alternatively may not be co-located with the other portions of the database and instead may be stored in separate local or remote file servers (not shown).

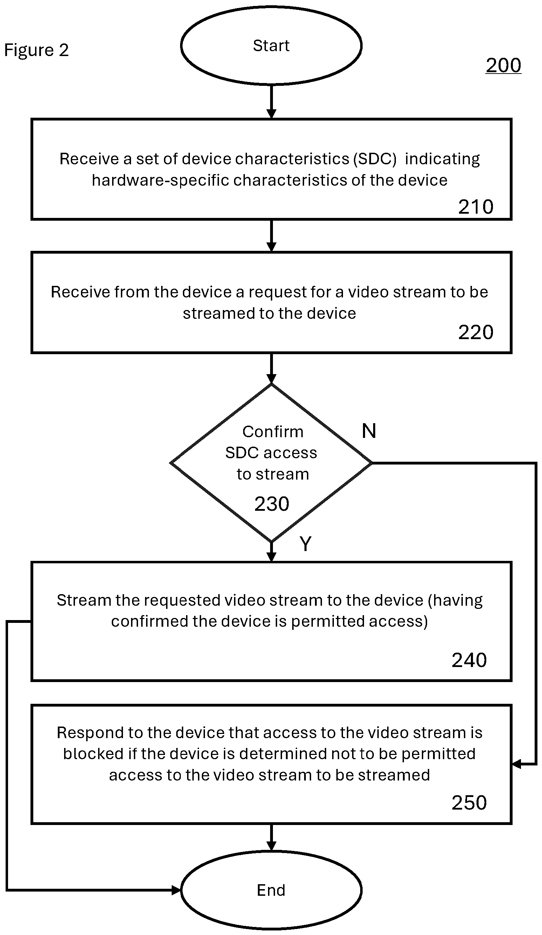

As part of the content management process, in either the same stream negotiation or in a separate parameter negotiation, a media device 150A/B/C may communicate authentication information identifying the account corresponding to the media device (e.g., using a username and password or a message signed with a shared or private key stored within the media device 150A/B/C). The media device 150A/B/C, as part of the method 200 of Fig. 2, may further communicate information (e.g., hardware information (such as screen size, aspect ratio, the presence of media-decoding hardware, and communications interfaces), software information (e.g., an operating system version, a playback/rendering app version, a browser version, and a communications stack version), and environmental information (e.g., self-detected bandwidth and location)) about the device itself for use by the content management system as shown in step 210. The device information may be communicated in any agreed-upon format including, for example, a JSON message or a set of key:: value pairs. In the context of a JSON message, the JSON message may be signed with a shared or private key to ensure that malicious devices do not try to trick the content management system 100 into treating the device as a device having characteristics other than it really has. For example, since the number of streams to "large screen" devices may not count against the number of simultaneous streams of an account, a malicious device should be prevented from pretending that it is a large screen device by being unable to produce a properly signed JSON message.

In an alternate implementation, in step 210, the hardware-specific information may be received by the content management system 100 from another platform (e.g., a trusted third-party platform with which the device is registered). The content management system 100 also can assess the hardware-specific information itself. For example, the content management system 100 may send messages to a device and monitor its responses to assess bandwidth constraints between the device and the content management system 100.

In step 220, a media device provides an identifier (e.g., Stream_ID ="Program1_Episode3", Stream_ID=123, or Stream_ID="https://url.respresenting.videolocation.co") that identifies the video stream that the media device is requesting permission to playback. If the content management system 100 confirms (in step 230) that the media device is permitted access to the video stream (e.g., as determined by a lookup in a database 115), control may pass to step 240 where the content management system 100 may determine a version of the video stream the content management system 100 should provide to the device (e.g., based on the confirmed set of device characteristics). The content management system 100 may then begin the transfer.

If, however, in step 230 the content management system 100 determines that the media device is not permitted access to the video stream, control may pass to step 250 in which the content management system 100 responds to the media device that access to the video stream is blocked. The process of FIG. 2 may be repeated for video stream requests from other devices and for the registration of device information with respect to new devices.

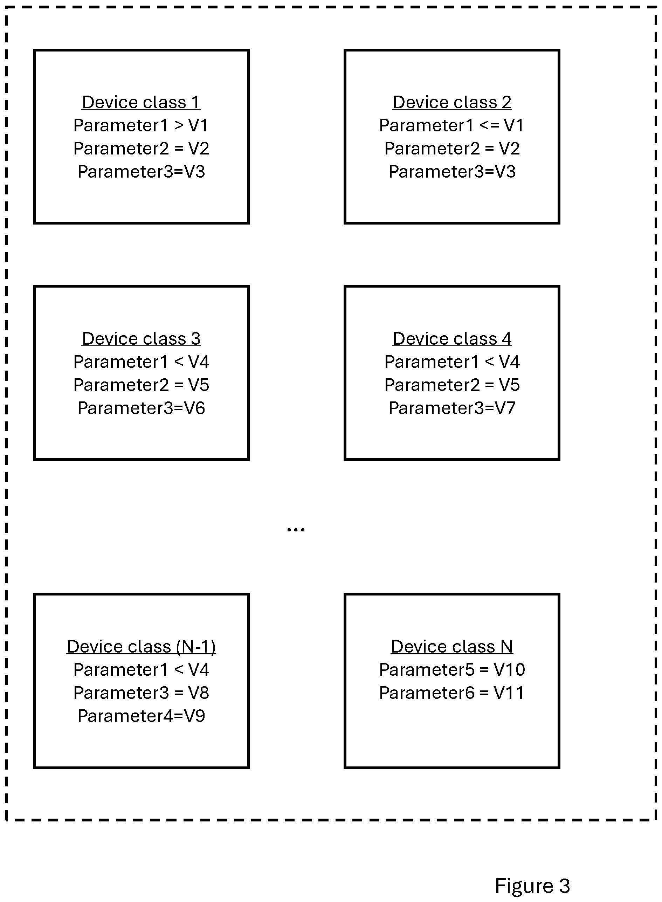

In one implementation, the processing of step 230 to confirm whether access is permitted may be based on device class rules for devices in various device classes so that the creation and management of rules is simplified. For example, as shown in FIG. 3, a content management system 100 may have established N device classes into one of which media devices will be classified. Device class 1 may be configured to include three parameters that must be met by a device to be included Device class 1. The illustrated parameters are generalized to be Parameter1, Parameter2, and Parameter3, each of which can have a number of values and/or value ranges. Content management system 100 may have been configured (e.g., by storing a device class definition in the storage 115) to specify that for a device to belong to Device class 1, Parameter1 must be greater than threshold value V1, Parameter2 must be equal to V2, and Parameter3 must be equal to value V3. Non-limiting examples of parameter types and values associated with those parameter types include Parameter1 being a screen size such that, for example, Parameter1>30 indicates that the screen size of a device that would be classified as belonging to device claim 1 is larger than 30 inches. This kind of parameter may be tracked because large playback devices typically are controlled differently than small, portable devices. As large screen devices tend to be actual televisions, those devices may not be treated as mobile devices which are limited in the number of simultaneous connections to avoid account sharing. Similarly, other parameters may help to identify that a media device is not a mobile device. Moreover, media devices may report to the content management system 100 that they are AC-powered devices which further clarify that the media devices are not mobile devices.

Parameter2 may be, for example, a brand of the media device such that branded streams can be provided to media devices in that class (e.g., media devices from television manufacturer "X" get better quality streams than other brands). Parameter3 may be, for example, whether devices in that class have hardware acceleration and therefore receive differently encoded streams. Other parameters include, but are not limited to, aspect ratios and communication rates.

In one configuration of such a content management system 100, in step 230, the set of device characteristics indicating hardware-specific characteristics of the device that is received may include a screen size of the device, and, when confirming whether the at least one version of the video stream is permitted to be streamed to the device, the content management system 100 may compare (a) the screen size of the device and (b) the set of permitted device characteristics for the video stream to be streamed to determine a device class of the device, thereby confirming whether the device is permitted access to the at least one version of the video stream.

Device classes also can be configured to specify-non-hardware based parameters, such as bandwidth available for the connection, versions of various software on the media device, geographic location information, and numbers of existing connections for various device classes. Such geographic location information may be needed to enforce restrictions on streaming a live sporting event to devices "close to" the sporting event when the sporting event is not sold out and therefore subject to blackout restrictions on televisions (but not mobile devices). In such a case, if a device of a particular device class is in a particular prohibited geographic region, then no stream of the sporting event is to be provided to the device. Instead, the device may receive a video stream that indicates to the viewer that the content is blocked due to geographic viewing restrictions.

Alternatively, certain device classes may require that the media device be "in home" to be permitted to receive certain streams (or streams of a particular encoding). In such configurations, the media device may be required to confirm its "in home" presence by any of a number of methods such as any of the method described herein. For example, in a first configuration, the system receives (e.g., from a user's Internet Service Provider (ISP)) an indication of the IP address associated with a user account's home location. Then, when a media device requests access to a stream, the IP address from which the request is being made can be compared with the known home IP address and used as part of the confirmation process.

However, the home IP address can change (e.g., due to network changes at the ISP) or the media device can be using a cellular connection that does not go through the ISP. In both such events, the media device could be wrongly determined to not be "in home." Thus, the system may utilize information provided by other devices with which the system can communicate that are known to be "in home." For example, the media device may communicate with a Set Top Box or other operator provided device in the home, any of which will be referred to herein as an "STB." The STB may additionally be integrated into a known device such as an AC-powered television that is configured with the user's account information. In one configuration, the STB uses a services discovery protocol (e.g., Bonjour or mDNS) to 'advertise' to a local network (e.g., WiFi or other network) that the STB can provide a "proof of being in home" service. The media device can then connect to the STB using the services discovery protocol and provide identification information to the STB which forwards it to the system to update the media device's location. In one such configuration, the STB may request from the system a digitally signed message (e.g., time/date stamped to prevent replay) and/or a random challenge and delivers that to the media device. The media device may then deliver back to the system a response confirming that it got the signed message or random challenge from the STB. For example, the media device may send as a response a signed version of the message or random challenge that was signed with the media device's public key (or a key shared with the system). The system then updates the device properties of the media device to indicate that the media device is `in home.'

On the mobile device, if the WiFi/network changes, the media device reports the change to the system which updates the media device's status back to out of home until the device recompletes the "in home" proof again. In some configurations, the process is repeated periodically, (e.g., every 24 hours) to prevent attempts to hide the device's true location.

In yet another implementation, the media device reports the set of other discoverable devices around it when requested to use as a fingerprint of its location given that the odds of the media device having the same devices as another household are low. Alternatively, GPS/Location services can be used in place of or in addition to the above techniques.

In yet another configuration, when the media device wishes to prove that it is "in home," it may be required to interact with a STB (connected to or integrated with a TV) in other ways.

For example, the media device can instruct the user to scan a QR code that is being displayed on the TV of the STB. The QR code may be either a static QR code or a dynamically changing QR code to ensure that the QR code is not being forwarded to another device that is not in home. In the case of a static QR code, the media device may have to scan the QR code within a fixed period of time.

In another implementation, the media device may have to capture and forward to the system an audio signal emitted by the STB or a TV connected to the STB. The STB similarly can provide a Bluetooth beacon that the media device has to prove that it is receiving/has received. Similarly, the STB may determine that the media device is "close to" the STB by measuring the "ping" time for the media device to respond to the STB. High latency in responding to a "ping" request indicates that the devices are not closely located, and the STB uses latency values over a threshold as an indication that the media device is not "in home."

The STB may similarly detect if the media device is close by using ultrawideband signals similar to those used in Airtags. Alternatively, the system may determine whether a media device is making a request from an IP address that is the same IP address as the STB associated with the user's home. This indicates that the media device is home because it is behind the same Network Address Translation (NAT) device as the STB. Parameters related to numbers of existing connections for various device classes may include various device types. For example, an account may be allowed to have "m" mobile devices, "t" tablet devices, "x" television devices, and "c" computer devices, where "m", "t", "x" and "c" are set at one level for accounts at a premium tier, but accounts associated with a lower tier have values of "m", "t", "x" and "c" set at one or more lower levels. In one implementation, when an account has more streams than allowed for its tier, rather than denying access to the video stream in its entirety, instead a device class is utilized that can cause the device to receive a lower quality stream than would be available if the account were using fewer streams.

In one implementation, the device classes may be evaluated as a set of ordered classes such that the content management system 100 checks the first device class before analyzing later device classes. This has the advantage that certain device class definitions can be written more compactly and that a last device class to be evaluated can be used as a "default device class."

The content management system 100 may include a database of known media devices and their known hardware configurations. In such an implementation, after a set of device classes have been defined, the content management system 100 may apply all the known media devices to the set of device classes to enable an administrator to analyze (1) what devices get assigned to what classes under the set of device classes and (2) whether any known devices do not fall into any of the specified device classes. If a number of devices do not fall into any of the specified device classes, the administrator may either add additional device classes or simply allow unclassified devices to be assigned to a "default" device class.

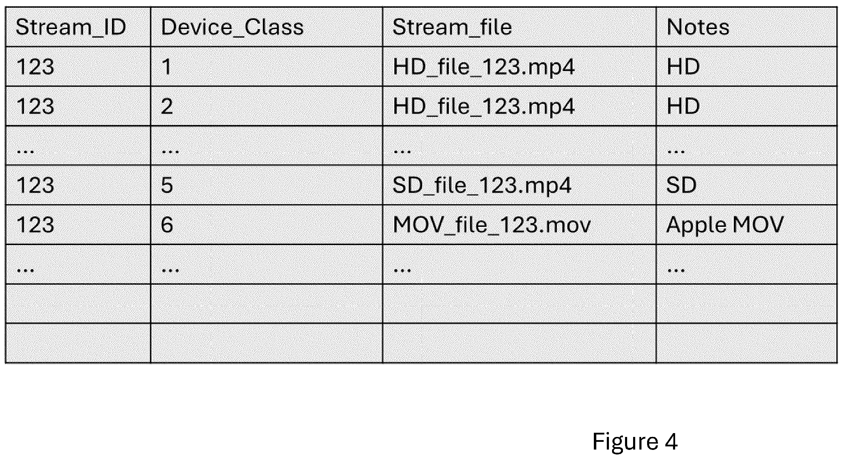

Once a set of device classes has been established, the device classes can be assigned to corresponding versions of each of the streams. For example, as shown in FIG. 4, for a particular video stream with Stream_ID=123, at least six different device classes are valid. For each of those device classes, the database includes a data row mapping Stream_ID and Device_Class to a file that is to be streamed to the devices of that device class when requested. In one implementation, the rows contain a "Notes" field that enables the administrator to specify notes about the stream (e.g., such as its encoding methodology/codec, its bitrate, its resolution, its frequency of intra-coded frames) so that if additional device classes are added the administrator has additional information about which of the versions of the stream a new device class should be added.

The content management system 100 can additionally track the number of times that each version of a stream is streamed and by which device. This information may be utilized to help an administrator detect that a particular version of a stream is rarely used which may indicate that its device class rule is too restrictive. The information also may indicate that devices appear to have inconsistencies that may be indicative of fraud. For example, a device that indicates that it is AC-powered but has a small screen size or a device that reports that it is AC-powered but indicates that it has changing geographic locations may both be indications that the device information of the device has been compromised or tampered with.

To enable an administrator to more quickly create the mappings of FIG. 4, the content management system 100 may provide a number of graphical user interfaces. For example, a first GUI may allow existing Stream_ID/Device_Class mappings to be duplicated for a new, specified Stream_ID being added to the system. The administrator then need only "drag and drop" the filenames of the corresponding versions of the streams to the corresponding mapping row to complete the creation of the data rows for the new Stream_ID.

The methods and systems described herein can be implemented in a number of technologies but generally relate to imaging devices and processing circuitry for performing the processes described herein. In one implementation, the processing circuitry (e.g., image processing circuitry and controller circuitry) is implemented as one of or as a combination of: an application specific integrated circuit (ASIC), a field programmable gate array (FPGA), a generic array of logic (GAL), a programmable array of logic (PAL), circuitry for allowing one-time programmability of logic gates (e.g., using fuses) or reprogrammable logic gates. Furthermore, the processing circuitry can include a computer processor and having embedded and/or external non-volatile computer readable memory (e.g., RAM, SRAM, FRAM, PROM, EPROM, and/or EEPROM) that stores computer instructions (binary executable instructions and/or interpreted computer instructions) for controlling the computer processor to perform the processes described herein. The computer processor circuitry may implement a single processor or multiprocessors, each supporting a single thread or multiple threads and each having a single core or multiple cores.

Thus, the foregoing discussion discloses and describes merely exemplary embodiments of the present disclosure. As will be understood by those skilled in the art, the present disclosure may be embodied in other specific forms without departing from the spirit thereof. Accordingly, the disclosure of the present disclosure is intended to be illustrative, but not limiting, of the scope of the disclosure, as well as other claims. The disclosure, including any readily discernible variants of the teachings herein, defines, in part, the scope of the foregoing claim terminology such that no inventive subject matter is dedicated to the public.

## Claims

1. A computer-implemented method of controlling access to video streams, the method comprising:
receiving a set of device characteristics indicating hardware-specific characteristics of a device;
receiving from the device a request for a video stream to be streamed to the device;
confirming the received set of device characteristics is one of a set of permitted device characteristics for the requested video stream; and
streaming the requested video stream to the device after confirming that the received set of device characteristics is one of the set of permitted device characteristics for the requested video stream.

2. The computer-implemented method as claimed in claim 1,
wherein receiving the set of device characteristics indicating hardware-specific characteristics of the device comprises receiving a screen size of the device; and
wherein confirming the received set of device characteristics is one of a set of permitted device characteristics for the requested video stream comprises confirming that the screen size of the device is included in the one of the set of permitted device characteristics for the requested video stream.

3. The computer-implemented method as claimed in claim 1 or claim 2,
wherein receiving the set of device characteristics indicating hardware-specific characteristics of the device comprises receiving a device type of the device;
wherein confirming the received set of device characteristics is one of the set of permitted device characteristics for the requested video stream comprises confirming that the device type of the device is included in one of plural device classes that are authorized to receive the requested video stream; and
wherein streaming the requested video stream to the device comprises streaming the requested video stream according to the one of the plural device classes in which the device type of the device is included.

4. The computer-implemented method as claimed in any one of claims 1 to 3,
wherein receiving the set of device characteristics indicating hardware-specific characteristics of the device comprises receiving an indication of whether the device is an AC-powered device;
wherein confirming the received set of device characteristics is one of the set of permitted device characteristics for the requested video stream comprises confirming that the device is an AC-powered device; and
wherein streaming the requested video stream to the device comprises streaming the requested video stream based on having confirmed that the device is an AC-powered device.

5. The computer-implemented method as claimed in any one of claims 1 to 4, further comprising receiving a set of account-specific information associated with an account associated with the device, wherein streaming the requested video stream to the device comprises streaming the requested video stream based on a set of permitted ranges of the account-specific information.

6. The computer-implemented method as claimed in claim 5, wherein the received set of account-specific information associated with the account associated with the device comprises account-specific information indicating a number of concurrent streams currently being streamed to devices of the account.

7. The computer-implemented method as claimed in any one of claims 1 to 6, further comprising receiving geographic location information associated with a geographic location of the device, wherein streaming the requested video stream to the device comprises streaming the requested video stream based on the geographic location information associated with the geographic location of the device.

8. The computer-implemented method as claimed in any one of claims 1 to 7, further comprising receiving geographic location information associated with a geographic location of the device, wherein streaming the requested video stream to the device comprises streaming the requested video stream in a geographically restricted region based on determining that the received set of device characteristics indicates that the device is permitted access to the requested video stream regardless of whether the geographic location information indicates that the device is located in the geographically restricted region.

9. The computer-implemented method as claimed in any one of claims 1 to 8,
wherein receiving the set of device characteristics indicating hardware-specific characteristics of the device comprises receiving an aspect ratio of a screen of the device;
wherein confirming the received set of device characteristics is one of the set of permitted device characteristics for the requested video stream comprises confirming that the aspect ratio of the screen of the device is included in the one of the set of permitted device characteristics for the requested video stream; and
streaming the requested video stream to the device after confirming that the aspect ratio of the screen of the device is included in the one of the set of permitted device characteristics for the requested video stream.

10. The computer-implemented method as claimed in any one of claims 1 to 9, further comprising receiving bandwidth information associated with the device,
wherein confirming the received set of device characteristics is one of a set of permitted device characteristics for the requested video stream comprises confirming that the bandwidth information associated with the device indicates that the device has a required bandwidth for the requested video stream; and
wherein streaming the requested video stream to the device comprises streaming the requested video stream to the device at a transmission bandwidth based on the received bandwidth information.

11. The computer-implemented method as claimed in any one of claims 1 to 10, further comprising specifying the set of permitted device characteristics for the video stream to be streamed by duplicating another set of permitted device characteristics for another video stream having a same content type as the video stream to be streamed.

12. The computer-implemented method as claimed in any one of claims 1 to 11, wherein receiving the set of device characteristics indicating hardware-specific characteristics of the device comprises receiving an amount of memory of the device;
wherein confirming the received set of device characteristics is one of the set of permitted device characteristics for the requested video stream comprises confirming that the amount of memory of the device is sufficient to playback the requested video stream; and
wherein streaming the requested video stream to the device comprises streaming the requested video stream based on having confirmed that the amount of memory of the device is sufficient to playback the requested video stream.

13. The computer-implemented method as claimed in any one of claims 1 to 12, further comprising receiving a set of platform-specific information associated with a platform on which the device plays backs video streams; and
wherein streaming the requested video stream to the device comprises streaming the requested video stream based on having confirmed that the platform on which the device plays backs video streams supports playback the requested video stream

14. The computer-implemented method as claimed in claim 13, wherein the set of platform-specific information comprises at least one of a browser platform or an operating system platform.

15. The computer-implemented method as claimed in any one of claims 1 to 14, wherein receiving the set of device characteristics comprises receiving at least one of (1) a JSON request indicating the hardware-specific characteristics of the device or (2) a set of key:: value pairs indicating the hardware-specific characteristics of the device.

## Amended claims

### Amended claims in accordance with Rule 137(2) EPC.

1. A computer-implemented method (200) of controlling access to video streams, the method comprising:
receiving (210) a set of device characteristics indicating hardware-specific characteristics of a device (150A-150C)
receiving geographic location information associated with a geographic location of the device;
receiving (220) from the device (150A-150C) a request for a video stream to be streamed to the device (150A-150C);
confirming (230) the received set of device characteristics is one of a set of permitted device characteristics for the requested video stream; and
streaming (240) the requested video stream to the device (150A-150C) after confirming that the received set of device characteristics is one of the set of permitted device characteristics for the requested video stream, wherein streaming (240) the requested video stream to the device (150A-150C) comprises streaming the requested video stream based on the geographic location information associated with the geographic location of the device (150A-150C).

2. The computer-implemented method (200) as claimed in claim 1,
wherein receiving (210) the set of device characteristics indicating hardware-specific characteristics of the device (150A-150C) comprises receiving a screen size of the device (150A-150C); and
wherein confirming (230) the received set of device characteristics is one of a set of permitted device characteristics for the requested video stream comprises confirming that the screen size of the device (150A-150C) is included in the one of the set of permitted device characteristics for the requested video stream.

3. The computer-implemented method (200) as claimed in claim 1 or claim 2,
wherein receiving (210) the set of device characteristics indicating hardware-specific characteristics of the device (150A-150C) comprises receiving a device type of the device (150A-150C);
wherein confirming (230) the received set of device characteristics is one of the set of permitted device characteristics for the requested video stream comprises confirming that the device type of the device (150A-150C) is included in one of plural device classes that are authorized to receive the requested video stream; and
wherein streaming (240) the requested video stream to the device comprises streaming the requested video stream according to the one of the plural device classes in which the device type of the device (150A-150C) is included.

4. The computer-implemented method (200) as claimed in any one of claims 1 to 3,
wherein receiving (210) the set of device characteristics indicating hardware-specific characteristics of the device (150A-150C) comprises receiving an indication of whether the device is an AC-powered device;
wherein confirming (230) the received set of device characteristics is one of the set of permitted device characteristics for the requested video stream comprises confirming that the device is an AC-powered device; and
wherein streaming (240) the requested video stream to the device (150A-150C) comprises streaming the requested video stream based on having confirmed that the device is an AC-powered device.

5. The computer-implemented method (200) as claimed in any one of claims 1 to 4, further comprising receiving a set of account-specific information associated with an account associated with the device (150A-150C), wherein streaming (240) the requested video stream to the device (150A-150C) comprises streaming the requested video stream based on a set of permitted ranges of the account-specific information.

6. The computer-implemented method (200) as claimed in claim 5, wherein the received set of account-specific information associated with the account associated with the device (150A-150C) comprises account-specific information indicating a number of concurrent streams currently being streamed to devices (150A-150C) of the account.

7. The computer-implemented method (200) as claimed in any one of claims 1 to 6, further comprising receiving geographic location information associated with a geographic location of the device (150A-150C),
wherein streaming (240) the requested video stream to the device comprises streaming the requested video stream in a geographically restricted region based on determining that the received set of device characteristics indicates that the device (150A-150C) is permitted access to the requested video stream regardless of whether the geographic location information indicates that the device (150A-150C) is located in the geographically restricted region.

8. The computer-implemented method (200) as claimed in any one of claims 1 to 7,
wherein receiving (210) the set of device characteristics indicating hardware-specific characteristics of the device (150A-150C) comprises receiving an aspect ratio of a screen of the device (150A-150C);
wherein confirming (230) the received set of device characteristics is one of the set of permitted device characteristics for the requested video stream comprises confirming that the aspect ratio of the screen of the device is included in the one of the set of permitted device characteristics for the requested video stream; and
streaming (240) the requested video stream to the device (150A-150C) after confirming that the aspect ratio of the screen of the device is included in the one of the set of permitted device characteristics for the requested video stream.

9. The computer-implemented method (200) as claimed in any one of claims 1 to 8, further comprising receiving bandwidth information associated with the device (150A-150C),
wherein confirming (230) the received set of device characteristics is one of a set of permitted device characteristics for the requested video stream comprises confirming that the bandwidth information associated with the device indicates that the device (150A-150C) has a required bandwidth for the requested video stream; and
wherein streaming (240) the requested video stream to the device (150A-150C) comprises streaming the requested video stream to the device at a transmission bandwidth based on the received bandwidth information.

10. The computer-implemented method (200) as claimed in any one of claims 1 to 9, further comprising specifying the set of permitted device characteristics for the video stream to be streamed by duplicating another set of permitted device characteristics for another video stream having the same content type as the video stream to be streamed.

11. The computer-implemented method (200) as claimed in any one of claims 1 to 10, wherein receiving (210) the set of device characteristics indicating hardware-specific characteristics of the device (150A-150C) comprises receiving an amount of memory of the device (150A-150C);
wherein confirming (230) the received set of device characteristics is one of the set of permitted device characteristics for the requested video stream comprises confirming that the amount of memory of the device (150A-150C) is sufficient to playback the requested video stream; and
wherein streaming (240) the requested video stream to the device (150A-150C) comprises streaming the requested video stream based on having confirmed that the amount of memory of the device is sufficient to playback the requested video stream.

12. The computer-implemented method (200) as claimed in any one of claims 1 to 11, further comprising receiving a set of platform-specific information associated with a platform on which the device (150A-150C) plays backs video streams; and
wherein streaming (240) the requested video stream to the device (150A-150C) comprises streaming the requested video stream based on having confirmed that the platform on which the device (150A-150C) plays backs video streams supports playback the requested video stream.

13. The computer-implemented method (200) as claimed in claim 12, wherein the set of platform-specific information comprises at least one of a browser platform or an operating system platform.

14. The computer-implemented method as claimed in any one of claims 1 to 13, wherein receiving the set of device characteristics comprises receiving at least one of (1) a JSON request indicating the hardware-specific characteristics of the device or (2) a set of key::value pairs indicating the hardware-specific characteristics of the device.
